# EUROPÄISCHE PATENTSCHRIFT

(11) **EP 1 386 827 B1**
(45) Veröffentlichungstag und Bekanntmachung des Hinweises auf die Patenterteilung: **23.01.2008**
(21) Anmeldenummer: 03010964.9
(22) Anmeldetag: 16.05.2003
(51) Int. Cl.: B62D 21/11

(54) **Hilfsrahmen für Kraftfahrzeuge**
Subframe for motor vehicles
Châssis auxiliaire pour véhicules automobiles

(30) Priorität: 01.08.2002 DE 10235110
(43) Veröffentlichungstag der Anmeldung: 04.02.2004
(73) Patentinhaber: AUDI AG, 85045 Ingolstadt (DE)
(72) Erfinder: Michel, Wilfried, 93339 Riedenburg (DE)
(74) Vertreter: Asch, Konrad

(56) Entgegenhaltungen:
- EP-A- 0 764 571
- FR-A- 2 615 458
- US-A- 3 864 989

## Beschreibung

Die Erfindung betrifft einen Hilfsrahmen für Kraftfahrzeuge, gemäß dem Oberbegriff des Patentanspruches 1.

Derartige auch als Fahrschemel bezeichnete Hilfsrahmen bieten neben einer hervorragenden Abkopplung von Störeinflüssen auf den Aufbau bzw. die Karosserie des Kraftfahrzeuges auch den Vorteil, dass z. B. bei einem frontgetriebenen Kraftfahrzeug die Radaufhängung, das gesamte Antriebsaggregat mit Motor und Geschwindigkeits-Wechselgetriebe und der Zahnstangenlenkung als eine Montageeinheit in das Kraftfahrzeug einbaubar ist. Ein derartiger Hilfsrahmen kann jedoch auch als hintere Einheit bei einem Kraftfahrzeug mit Allradlenkung einsetzbar sein.

Aus der EP 0 764 571 A1 ist eine gattungsgemäße Tragstruktur mit einem Vorderachsquerträger sowie zwei Seitenträgern bekannt. Der Vorderachsquerträger ist unmittelbar durch das Gehäuse eines Zahnstangen-Lenkgetriebes gebildet. Dadurch ist die vordere Tragstruktur gewichtsmäßig leicht ausgeführt.

Aufgabe der Erfindung ist es, einen Hilfsrahmen der gattungsgemäßen Art vorzuschlagen, der einfacher und fertigungstechnisch günstiger ausgebildet ist und der weitere Montagevorteile ermöglicht.

Diese Aufgabe wird erfindungsgemäß mit den kennzeichnenden Merkmalen des Patentanspruches 1 gelöst. Vorteilhafte Weiterbildungen der Erfindung beschreiben die weiteren Patentansprüche.

Erfindungsgemäß wird vorgeschlagen, dass einer der Querträger unmittelbar durch das Gehäuse des Zahnstangen-Lenkgetriebes gebildet ist und dass das Gehäuse mit den Längsträgern lösbar verbunden ist. Erfindungsgemäß ist ein Querträger des Hilfsrahmens unmittelbar durch das Gehäuse des Zahnstangen-Lenkgetriebes ersetzt. Aufgrund der lösbaren Befestigung (in der Regel mittels Schrauben) kann zudem das Lenkgetriebe bei anfallenden Reparaturen problemlos ausgebaut werden.

Ferner ist das Gehäuse nach unten abschraubbar an den Längsträgern befestigt. Damit wird ein ggf. erforderlicher Ausbau des Lenkgetriebes weiter vereinfacht, wobei die Längsträger und alle an diesen befindliche Anbauten unbeeinflusst bleiben bzw. nicht demontiert werden müssen.

Des Weiteren ist das Gehäuse in nach oben zurückgesetzte Bereiche der Längsträger eingesetzt und sind die Befestigungsabschnitte des Gehäuses so gestaltet sind, dass die damit verbundenen Materialschwächungen der Längsträger ausgeglichen sind. Dies ergibt zunächst den Vorteil, dass das Lenkgetriebe ausreichend hoch im Kraftfahrzeug positioniert werden kann (ausreichender Freigang zur Fahrbahn und günstige Anbindung der Spurstangen), wobei die damit verbundene Schwächung der Längsträger des Hilfsrahmens in Längsrichtung des Kraftfahrzeuges durch die entsprechend ausgesteiften Befestigungsabschnitte des Gehäuses eliminiert werden.

Bevorzugt können zu dieser Aussteifung an die Befestigungsabschnitte Brückenglieder mit insbesondere in Längsrichtung verformungssteifen Wänden angeformt sein.

In vorteilhafter Weiterbildung der Erfindung kann das Gehäuse des Lenkgetriebes durch fachwerkartige Versteifungen mit einem Obergurt und/oder einem Untergurt verstärkt sein. Damit können sowohl im Fahrbetrieb des Kraftfahrzeuges auftretende Biegemomente aufgenommen sowie die erforderliche höhere Biegesteifigkeit des Lenkgetriebes sichergestellt werden.

Dies ist insbesondere dann vorteilhaft, wenn das Gehäuse des Lenkgetriebes ferner Aufnahmen für die Lagerung eines Antriebsaggregates des Kraftfahrzeuges aufweist, weil damit verbunden verstärkt in Hochrichtung wirkende Antriebsmomente und Lastschwankungen abzustützen sind, verbunden mit einer höheren Gewichtsbelastung. Das Antriebsaggregat kann der Motor (die Brennkraftmaschine) oder das Geschwindigkeits-Wechselgetriebe oder ein Hinterachsdifferenzial des Kraftfahrzeuges sein.

Zur weiteren Montageerleichterung, z. B. beim Ausbau des Antriebsaggregates, kann der weitere Querträger ebenfalls lösbar und nach unten abbaubar ausgebildet sein und können alle aufbauseitigen Lageraufnahmen an den Längsträgern angeordnet sein. Daraus resultiert, dass durch einfaches Lösen des Gehäuses des Lenkgetriebes und des weiteren Querträgers das Antriebsaggregat nach unten absenkbar oder ausbaubar ist oder es können in einfacher Weise das Lenkgetriebe oder der weitere Querträger nach unten abgebaut werden (z. B. wenn eine untere Ölwanne eines Aggregates oder andere Aggregatteile abzubauen wären).

Zur Erzielung einer hohen Biegesteifigkeit kann auch der weitere Querträger fachwerkartig mit Versteifungswänden und Seitenwänden ausgeführt sein, insbesondere wenn dieser ebenfalls zumindest eine Aufnahme für eine Lagerung des Antriebsaggregates besitzt und einer dementsprechenden Mehrbelastung ausgesetzt ist.

Schließlich können in fertigungstechnisch günstiger Weise das Gehäuse und/oder der weitere Querträger aus einer Leichtmetalllegierung und bevorzugt im Druckgussverfahren hergestellt sein. Aufgrund der dadurch möglichen hervorragenden Anpassung der Bauteile an die spezifischen Belastungen zur Erzielung gleichmäßiger Bauteilspannungen (Verrippungen, Wandstärken, etc.) können leichte, baulich und preislich günstige Bauteile bei niedrigen Taktzeiten bereitgestellt werden.

Ein Ausführungsbeispiel der Erfindung ist im Folgenden mit weiteren Einzelheiten näher beschrieben.

Die anliegende schematische Zeichnung zeigt in:
- Fig. 1: in vereinfachter Darstellung eine Draufsicht auf einen Hilfsrahmen für ein frontgetriebenes Kraftfahrzeug mit zwei Längsträgern, zwei Querträgern und Aufnahmen zur Befestigung am Aufbau, für Radaufhängungen und für Lager des Antriebsaggregates;
- Fig. 2: in raumbildlicher Darstellung abschnittsweise den linken Längsträger und das Gehäuse des Zahnstangen-Lenkgetriebes des Hilfsrahmens nach Fig. 1;
- Fig. 3: einen Schnitt gemäß Linie III - III der Fig. 2 durch den Längsträger mit dem Befestigungsabschnitt des Lenkgetriebes; und
- Fig. 4: abschnittsweise den linken Längsträger des Hilfsrahmens nach Fig. 1 mit dem teilweise dargestelltem, hinteren Querträger.

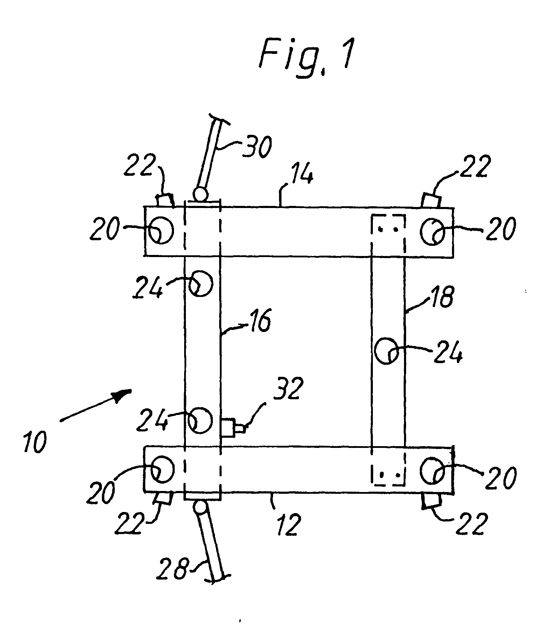

Gemäß Fig. 1 ist ein Hilfsrahmen 10 vereinfacht dargestellt, der sich aus zwei Längsträgern 12, 14 und zwei Querträgern 16, 18 zusammensetzt. Der Hilfsrahmen 10 ist über einheitlich mit 20 bezeichnete Aufnahmen an den Längsträgern 12, 14 und über nicht dargestellte Gummilager geräuschisoliert am Aufbau des Kraftfahrzeuges befestigt.

Ferner weisen die Längsträger 12, 14 in an sich bekannter Weise einheitlich mit 22 bezeichnete Aufnahmen für nicht dargestellte Radaufhängungselemente für die Radaufhängung des Kraftfahrzeuges auf.

Des Weiteren sind an den Querträgern 16, 18 Aufnahmen 24 angeordnet, mittels derer das nicht dargestellte Antriebsaggregat des Kraftfahrzeuges in einer Dreipunktlagerung (eine Vierpunktlagerung mit zwei hinteren Aufnahmen 24 wäre alternativ möglich) über entsprechende Gummilager aufgehängt ist. Das Antriebsaggregat ist im Falle eines frontgetriebenen Kraftfahrzeuges der Motor (Brennkraftmaschine) und das Geschwindigkeits-Wechselgetriebe mit integriertem Vorderachsdifferenzial.

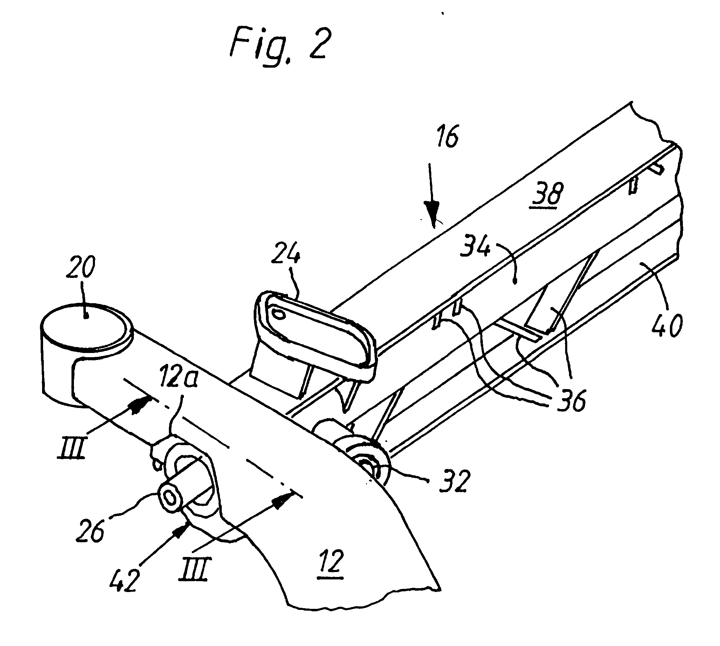

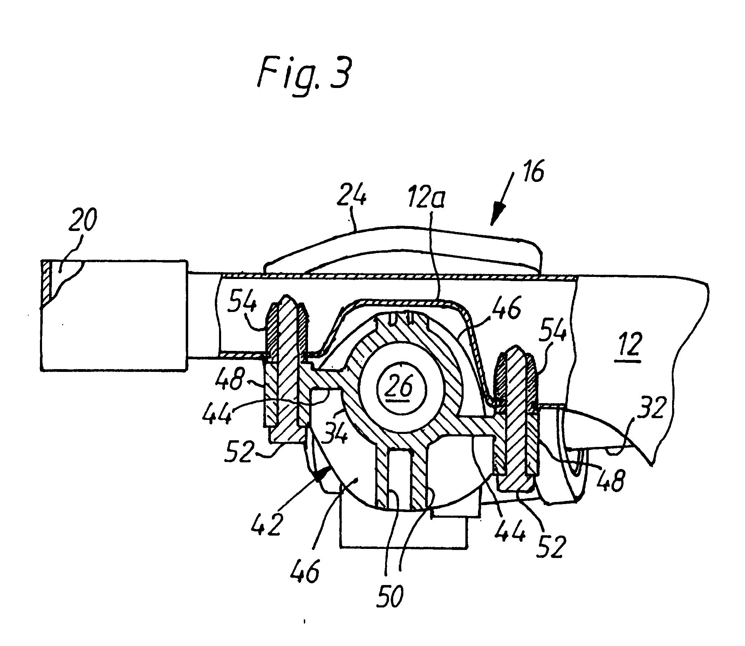

Der vordere Querträger 16 ist durch das Gehäuse (ebenfalls mit 16 bezeichnet) des Zahnstangen-Lenkgetriebes des Kraftfahrzeuges gebildet, dessen querverschiebliche Zahnstange 26 (vgl. auch Fig. 2 und 3) mit zu den lenkbaren Rädern des Kraftfahrzeuges führenden Spurstangen 28, 30 gelenkig verbunden ist. Das nicht ersichtliche Antriebsritzel des Lenkgetriebes ist über die Lenkwelle 32 des Lenkgetriebes in bekannter Weise mit der Lenksäule und dem Lenkhandrad des Kraftfahrzeuges (nicht dargestellt) trieblich verbunden. Soweit nicht beschrieben, ist das Zahnstangen-Lenkgetriebe herkömmlicher Bauart.

In den Fig. 2 und 3 ist mehr detailliert der vordere Querträger 16 bzw. das Gehäuse 16 des Lenkgetriebes abschnittsweise dargestellt.

Das Gehäuse 16 aus einer Leichtmetalllegierung weist einen rohrförmigen Abschnitt 34 auf, an den fachwerkartig Versteifungswände 36, ein Obergurt 38 und ein Untergurt 40 definierter Wandstärke angegossen sind. Das rohrförmige, die Zahnstange 26 aufnehmende Gehäuse 34, der Obergurt 38 und der Untergurt 40 laufen seitlich zu Befestigungsabschnitten 42 zusammen, wie sie in dem Längsschnitt der Fig. 3 ersichtlich sind.

Der in Anbindung an den Längsträger 12 dargestellte Befestigungsabschnitt 42 (die gegenüberliegende Seite am Längsträger 14 ist spiegelbildlich gleich ausgeführt) des Gehäuses 16 ist in einen nach oben zurückgesetzten Bereich 12a des Längsträgers 12 von unten eingesetzt und mittels eines an das rohrförmige Gehäuse 34 angeformten Brückengliedes 44 mit zwei Schraubenpfeifen 48 mittels der Schrauben 52 befestigt. Die die Schraubenpfeifen 48 durchdringenden Schrauben 52 sind dabei in Gewindemuttern 54 des Längsträgers 12 eingeschraubt.

Alternativ besteht auch die Möglichkeit, den Querträger mit einem in horizontaler Richtung liegenden Befestigungsabschnitt auszubilden, so dass das Verbindungsmittel in horizontaler Richtung anordenbar ist.

Das Brückenglied 44 ist mit zwei um das rohrförmige Gehäuse 34 umlaufenden, radial ausgerichteten Wänden 46 versehen (in der Schnittansicht ist nur eine umlaufende Wand 46 ersichtlich), die an das rohrförmige Gehäuse 34 einerseits und an die dazwischenliegenden Schraubenpfeifen 48 andererseits angebunden sind. Die zwei umlaufenden Wände 46 sind mit Querwänden 50 zusätzlich querversteift.

Die Befestigungsabschnitte 42 bzw. die Brückenglieder 44 mit den Wänden 46, 50 sind so steif ausgelegt, dass die durch den zurückgesetzten Bereich 12a des Längsträgers 12 bzw. 14 sich ergebende Schwächung in der Knicksteifigkeit eliminiert ist.

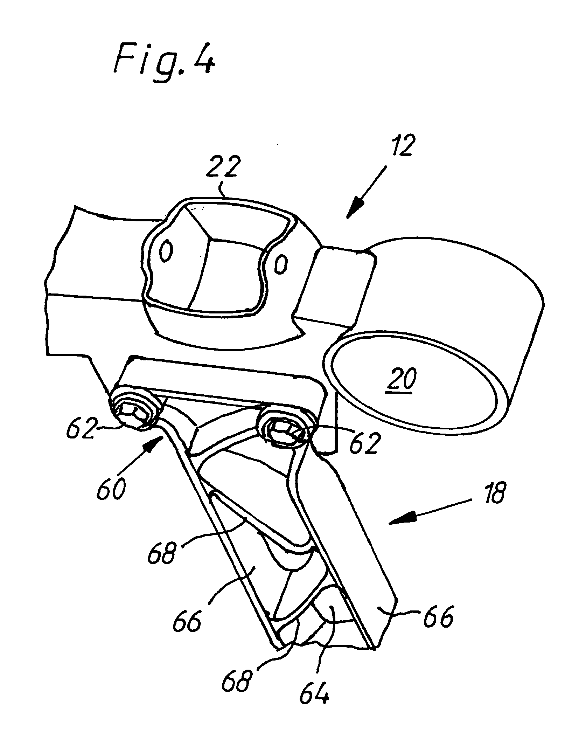

Die Fig. 4 schließlich zeigt abschnittsweise den hinteren Querträger 18, der aus einer Leichtmetalllegierung gegossen hergestellt ist und mit beidseitigen Flanschabschnitten 60 mittels jeweils zwei Schrauben 62 von unten an den Längsträgern 12, 14 befestigt ist.

Der Querträger 18 setzt sich im Wesentlichen aus einem Obergurt 64, zwei seitlichen Wänden 66 und die Seitenwände 66 fachwerkartig verbindende Versteifungsrippen 68 zusammen.

Das Gehäuse 16 bzw. der durch dieses gebildete Querträger 16 und der Querträger 18 sind im Druckgussverfahren aus einer Aluminium-Legierung gefertigt.

Die Herstellung ist jedoch nicht auf das Druckgussverfahren eingeschränkt. Möglich sind auch andere für Leichtmetall übliche Fertigungsverfahren wie z. B. Kokillenguss oder Sandguss.

## Patentansprüche

1. Hilfsrahmen für Kraftfahrzeuge, der aus zwei Längsträger und zwei Querträger gebildet ist und der über dämpfende Lager mit dem Aufbau des Kraftfahrzeuges verbunden ist und an dem ein Zahnstangen-Lenkgetriebe, ein Antriebsaggregat des Kraftfahrzeuges tragende Lageraufnahmen und ggf. Aufnahmen für Radführungsteile der Radaufhängung des Kraftfahrzeuges angeordnet sind, **dadurch gekennzeichnet,**
**dass** einer der Querträger unmittelbar durch das Gehäuse (16) des Zahnstangen-Lenkgetriebes gebildet ist und dass das Gehäuse (16) mit den Längsträgern (12, 14) lösbar dergestalt verbunden ist, dass das Gehäuse (16) nach unten abschraubbar an den Längsträgern (12, 14) befestigt ist, und
**dass** das Gehäuse (16) in nach oben zurückgesetzte Bereiche (12a, 14a) der Längsträger (12, 14) eingesetzt ist und dass die Befestigungsabschnitte (42) des Gehäuses (16) so gestaltet sind, dass die damit verbundenen Materialschwächungen der Längsträger (12, 14) eliminiert sind.

2. Hilfsrahmen nach Anspruch 1, **dadurch gekennzeichnet, dass** an die Befestigungsabschnitte (42) Brückenglieder (44) mit insbesondere in Längsrichtung verformungssteifen Wänden (46) angeformt sind.

3. Hilfsrahmen nach Anspruch 1 oder 2, **dadurch gekennzeichnet, dass** das Gehäuse (16) durch fachwerkartige Versteifungswände (36) mit einem Obergurt (38) und/oder einem Untergurt (40) verstärkt ist.

4. Hilfsrahmen nach einem der Ansprüche 1 bis 3, **dadurch gekennzeichnet, dass** das Gehäuse (16) ferner Aufnahmen (24) für die Lagerung eines Antriebsaggregates des Kraftfahrzeuges aufweist.

5. Hilfsrahmen nach Anspruch 4, **dadurch gekennzeichnet, dass** das Gehäuse (16) den vorderen Querträger bildet und dass die Aufnahmen (24) für die Motorlager des Kraftfahrzeuges vorgesehen sind.

6. Hilfsrahmen nach einem der Ansprüche 1 bis 5, **dadurch gekennzeichnet, dass** der weitere Querträger (18) ebenfalls lösbar und nach unten abbaubar ausgebildet ist und dass alle aufbauseitigen Lageraufnahmen (20) an den Längsträgern (12, 14) angeordnet sind.

7. Hilfsrahmen nach Anspruch 6, **dadurch gekennzeichnet, dass** der weitere Querträger (18) ebenfalls fachwerkartig mit Versteifungsrippen (68), einem Obergurt (64) und Seitenwänden (66) hergestellt ist.

8. Hilfsrahmen nach einem de Ansprüche 1 bis 7, **dadurch gekennzeichnet, dass** an dem weiteren Querträger (18) zumindest eine weitere Aufnahme (24) für ein Aggregatelager angeordnet ist.

9. Hilfsrahmen nach einem der Ansprüche 1 bis 8, **dadurch gekennzeichnet, dass** das Gehäuse (16) und/oder der weitere Querträger (18) aus einer Leichtmetalllegierung hergestellt ist.

10. Hilfsrahmen nach Anspruch 9, **dadurch gekennzeichnet, dass** das Gehäuse (16) und/oder der weitere Querträger (18) im Druckgussverfahren hergestellt ist.

11. Hilfsrahmen nach Anspruch 9, **dadurch gekennzeichnet, dass** das Gehäuse (16) und/oder der weitere Querträger (18) im Sandgussverfahren oder Kokillengussverfahren hergestellt sind.

## Claims

1. Sub-frame for motor vehicles, which is constituted by two side members and two cross members and, which is connected to the body of the motor vehicle via cushion bearings and on which a rack and pinion steering gear, a bearing seat carrying the drive unit of the motor vehicle and if necessary seats for the wheel guide parts of the wheel suspension of the motor vehicle are arranged, **characterised in that**,
one of the cross members is directly constituted by the housing (16) of the rack and pinion steering gear and that the housing (16) is detachably connected to the side members (12, 14) in such a way that the housing (16) is fastened downwardly to the side members (12, 14) so that it can be unscrewed and
the housing (16) is inserted in upwardly recessed areas (12a, 14a) of the side members (12, 14) and that the fastening sections (42) of the housing (16) are designed so that the associated material weaknesses in the side members (12, 14) are eliminated.

2. Sub-frame according to claim 1, **characterised in that** bridge elements (44) with walls (46), which are resistant to deformation particularly in the longitudinal direction are moulded on the fastening sections (42).

3. Sub-frame according to claim 1 or 2, **characterised in that** the housing (16) is reinforced with an upper band (38) and / or a lower band (40) via lattice like stiffening walls (36).

4. Sub-frame according to one of claims 1 to 3, **characterised in that** the housing (16) also has seats (24) for the bearing of a drive unit of the motor vehicle.

5. Sub-frame according to claim 4, **characterised in that** the housing (16) constitutes the front cross member and that the seats (24) are provided for the engine bearing of the motor vehicle.

6. Sub-frame according to one of claims 1 to 5, **characterised in that** the additional cross member (18) is also made detachable and downwardly dismantleable and that all bearing seats (20) on the body side are arranged on the side members (12, 14).

7. Sub-frame according to claim 6, **characterised in that** the additional cross member (18) is also made lattice-like using stiffening ribs (68), an upper band (64) and side walls (66).

8. Sub-frame according to one of claims 1 to 7, **characterised in that** at least one additional seat (24) for a unit bearing is arranged on the additional cross member (18).

9. Sub-frame according to one of claims 1 to 8, **characterised in that** the housing (16) and / or the additional cross member (18) is made of a light alloy.

10. Sub-frame according to claim 9, **characterised in that** the housing (16) and / or the additional cross member (18) are made using the die casting method.

11. Sub-frame according to claim 9, **characterised in that** the housing (16) and / or the additional cross member (18) are made using the sand casting method or the chill casting method.

## Revendications

1. Sous-châssis pour véhicules automobiles qui est formé de deux longerons et de deux traverses et qui est relié à la structure du véhicule automobile par le biais de paliers amortisseurs et sur lequel sont disposés un mécanisme de direction à crémaillère, des logements de paliers portant un ensemble d'entraînement du véhicule automobile et éventuellement des logements pour des parties de guidage de roue de la suspension de roue du véhicule automobile, **caractérisé en ce**
**qu'**une des traverses est directement formée par le boîtier (16) du mécanisme de direction à crémaillère, et en ce que le boîtier (16) est relié de manière amovible aux longerons (12, 14) de telle manière que le boîtier (16) est fixé vers le bas de manière dévissable sur les longerons (12, 14), et
en ce que le boîtier (16) est utilisé dans des zones (12a, 14a) des longerons (12, 14) reculées vers le haut et en ce que les parties de fixation (42) du boîtier (16) sont conçues de telle sorte que les affaiblissements de matériau des longerons (12, 14) soient éliminés.

2. Sous-châssis selon la revendication 1, **caractérisé en ce que** sur les parties de fixation (42) sont formés des éléments de pont (44) présentant des parois (46) résistantes à la déformation en particulier dans le sens longitudinal.

3. Sous-châssis selon la revendication 1 ou 2, **caractérisé en ce que** le boîtier (16) est renforcé par des parois de renfort (36) de type treillis présentant une membrure supérieure (38) et/ou une membrure inférieure (40).

4. Sous-châssis selon l'une quelconque des revendications 1 à 3, **caractérisé en ce que** le boîtier (16) présente en outre des logements (24) pour loger un ensemble d'entraînement du véhicule automobile.

5. Sous-châssis selon la revendication 4, **caractérisé en ce que** le boîtier (16) forme la traverse avant et **en ce que** les logements (24) sont prévus pour les paliers du moteur du véhicule automobile.

6. Sous-châssis selon l'une quelconque des revendications 1 à 5, **caractérisé en ce que** l'autre traverse (18) est également conçue de manière amovible et démontable vers le bas et **en ce que** tous les logements de palier côté structure (20) sont disposés sur les longerons (12, 14).

7. Sous-châssis selon la revendication 6, **caractérisé en ce que** l'autre traverse (18) est également fabriquée en treillis avec des nervures raidisseuses (68), une membrure supérieure (64) et des parois latérales (66).

8. Sous-châssis selon l'une quelconque des revendications 1 à 7, **caractérisé en ce que** sur l'autre traverse (18) est disposé au moins un autre logement (24) pour un palier d'ensemble.

9. Sous-châssis selon l'une quelconque des revendications 1 à 8, **caractérisé en ce que** le boîtier (16) et/ou l'autre traverse (18) est fabriquée en un alliage léger.

10. Sous-châssis selon la revendication 9, **caractérisé en ce que** le boîtier (16) et/ou l'autre traverse (18) est fabriquée dans un procédé de coulée sous pression.

11. Sous-châssis selon la revendication 9, **caractérisé en ce que** le boîtier (16) et/ou l'autre traverse (18) est fabriquée au cours d'un procédé de coulée en sable ou d'un procédé de coulée en coquille.
